## Europäisches Patentamt
## European Patent Office
## Office européen des brevets

(11) Veröffentlichungsnummer: **0 130 298**
A2

# (12) EUROPÄISCHE PATENTANMELDUNG

(21) Anmeldenummer: **84104325.0**

(22) Anmeldetag: **17.04.84**

(51) Int. Cl.⁴: **G 01 L 5/10,** G 01 G 19/18

(30) Priorität: **01.07.83 DE 3323662**

(43) Veröffentlichungstag der Anmeldung: **09.01.85**
**Patentblatt 85/2**

(84) Benannte Vertragsstaaten: **AT BE CH DE FR GB IT LI NL SE**

(71) Anmelder: **MANNESMANN Aktiengesellschaft, Mannesmannufer 2, D-4000 Düsseldorf 1 (DE)**

(72) Erfinder: **Zacharias, Karl, Dipl.-Ing., Am Wiesenberge 21, D-5840 Schwerte (DE)**

(54) **Lastmesseinrichtung für Hebezeuge.**

(57) Das ovale Meßstück (1) ist mittels eines angedeuteten Aufhängebolzens (2) an einem nicht gezeichneten Hebezeug befestigt und stellt die Verbindung zu einem angedeuteten Huborgan (3) dar, über das die Last gehoben wird. Das Meßstück (1) hat im Anschluß an Endbögen (1c) Längsseiten (1a) und (1b) und zwischen diesen in einem Gehäuse (9, 13) ein Schaltelement (4) in Form eines Mikroschalters, dessen Schaltstößel (5) bei Belastung des Meßstückes (1) durch Zug am Huborgan (3) gegen die Längsseite (1b) stößt, die an dieser Stelle einen Vorsprung aufweist. Das Gehäuse (9, 13) ist mittels Schrauben (11) an der Längsseite (1a) des Meßstückes (1) befestigt und hat Muttern (8) für Justierschrauben (7), mit denen das Schaltelement (4) zum Einstellen des richtigen Abstandes zwischen Schaltstößel (5) und Vorsprung (6) justiert ist.

ACTORUM AG

EP 0 130 298 A2

Die Erfindung betrifft eine Lastmeßeinrichtung für Hebezeuge mit Hilfe eines Meßstückes, an dem ein Huborgan zum Aufnehmen der Last befestigt ist.

Derartige Lastmeßeinrichtungen sind durch die DE-AS 26 39 762 bekannt und dienen zum Ermitteln der Last oder als Oberlastsicherung und schalten bei Gefahr einer Oberlastung des Hebezeuges den Hubwerksmotor ab. Die vorbekannte Lastmeßeinrichtung besteht aus einem Flachprofil und hat zwischen Endbohrungen eine Verjüngung, an der Dehnungsmeßstreifen angeordnet sind. Diese Einrichtung hat zwar den Vorteil, daß der gesamte Lastbereich meßbar ist, nachteilig sind jedoch die vergleichsweise hohen Herstellkosten.

Aufgabe der Erfindung ist es daher, eine preiswerte Lastmeßeinrichtung mit niedriger Bauhöhe zu schaffen. Diese Aufgabe wird dadurch gelöst, daß das Meßstück als Teilstück einer Gliederkette ausgebildet ist, und daß zwischen den Längsseiten des Meßstückes ein Verformungsermittler angeordnet ist. Das Meßstück ist nicht länger als ein übliches Kettenglied und mit geringem Aufwand herstellbar. Es ist vorzugsweise oval, wobei das Verhältnis der inneren Meßstückbreite zur inneren Meßstückhöhe etwa 1:1,8 bis 1:2,5 beträgt. Der Federweg zwischen den Längsseiten des Meßstückes beträgt bei Nennlast ca. 0,8 mm. Dieser relativ große Federweg gestattet es, einen Verformungsermittler in Form eines Schaltelements direkt, d.h. ohne eine den Federweg vergrößernde Hebelanordnung zu betätigen. Dieses Prinzip begründet die erreichte große Wiederholgenauigkeit des einjustierten Schaltpuntes auch nach 4 Millionen Schaltspielen. Das Schaltelement ist an der Längsseite des Meßstückes befestigt; sein Schaltstößel wird von der anderen Längsseite betätigt, die vorzugsweise an dieser Stelle einen Vorsprung aufweist.

. . . . .

In weiterer Ausgestaltung der Erfindung ist der Verformungsermittler bzw. das Schaltelement mit einer Einstellvorrichtung versehen, wobei das Schaltelement zwischen Justierschrauben gehalten sein kann, für die in einem durch eine Trenn-Dichtleiste in zwei Hälften unterteilten Gehäuse Muttern angeordnet sind. Es können mehrere Schaltelemente mit unterschiedlichen Schaltpunkten vorhanden sein, wobei als Schaltelemente Mikroschalter verwendet werden können. Das Gehäuse kann mittels Schrauben an einer der Längsseiten befestigt sein.

In weiterer Ausgestaltung der Erfindung können die Längsseiten des Meßstückes über einen Steg miteinander verbunden sein, an dem Dehnungsmeßstreifen angeordnet sind. Der Steg erfährt dann bei Belastung des Meßstückes eine Spannung, die von den Dehnungsmeßstreifen in bekannter Weise festgestellt wird und über eine Auswerteeinrichtung die Steuerung des Hebezeuges beeinflußt.

Ein Ausführungsbeispiel der Erfindung ist in der Zeichnung dargestellt und im folgenden erläutert. Es zeigen:

Fig. 1   das Meßstück in der Seitenansicht,

Fig. 2   den Schnitt II-II durch die Fig. 1,

Fig. 3   den Schnitt III-III durch die Fig. 1.

Das ovale Meßstück 1 ist mittels eines angedeuteten Aufhängebolzens 2 an einem nicht gezeichneten Hebezeug befestigt und stellt die Verbindung zu einem angedeuteten Huborgan 3 dar, über das die Last gehoben wird. Das Meßstück 1 hat im Anschluß an Endbögen 1c Längsseiten 1a und 1b und zwischen diesen in einem aus zwei Hälften 9, 13 gebildeten Gehäuse ein Schaltelement 4 in Form eines

.....

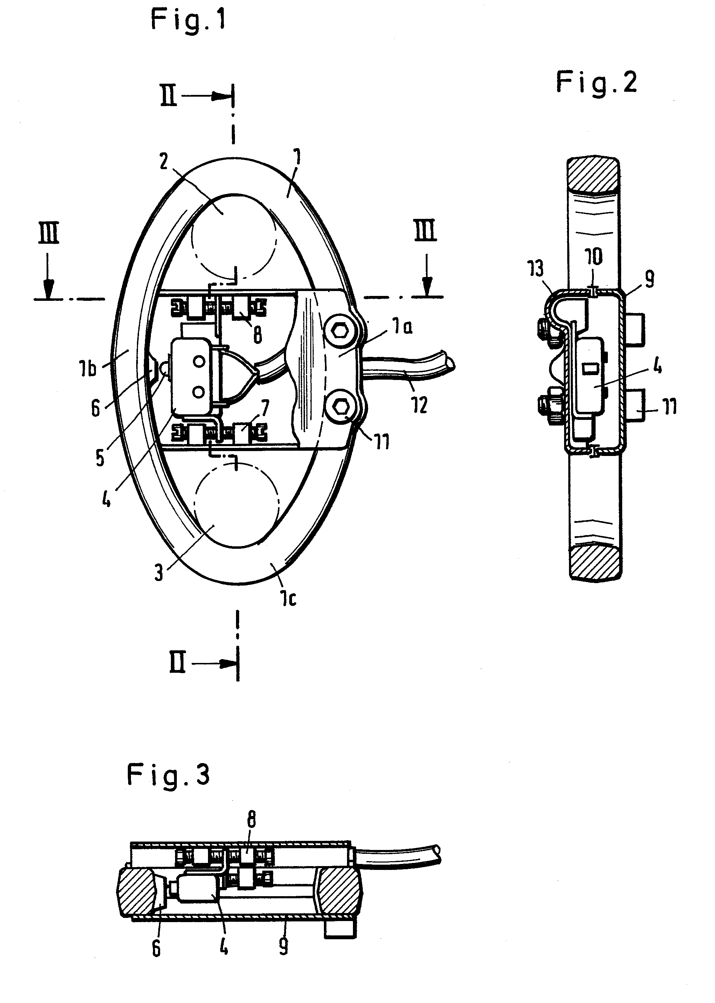

Mikroschalters, dessen Schaltstößel 5 bei Belastung des Meßstückes 1 durch Zug am Huborgan 3 gegen einen Vorsprung 6 der
Längsseite 1b stößt. Das Gehäuse 9, 13 ist mittels Schrauben 11
an der Längsseite 1a des Meßstückes 1 befestigt und hat Muttern 8
für Justierschrauben 7, mit denen das Schaltelement 4 zum Einstellen des richtigen Abstandes zwischen Schaltstößel 5 und Vorsprung 6 justiert ist. Das aus zwei Hälften 9 und 13 gebildete
Gehäuse ist mittels einer Trenn-Dichtleiste 10 nach dem Zusammenbau abgeschlossen, wie Fig. 2 zeigt. Von dem Schaltelement 4
führt eine Anschlußleitung 12 zu einem nicht gezeichneten Schaltschütz für den Hubwerksmotor.

0130298

Mannesmann Aktiengesellschaft

Mannesmannufer 2

4000 Düsseldorf

30. Juni 1983

22912 - Ko /Un.

---

## Lastmeßeinrichtung für Hebezeuge

---

### Patentansprüche

1. Lastmeßeinrichtung für Hebezeuge mit Hilfe eines Meßstückes, an dem ein Huborgan zum Aufnehmen der Last befestigt ist, dadurch gekennzeichnet, daß das Meßstück (1) als Teilstück einer Gliederkette ausgebildet ist, und daß zwischen den Längsseiten (1a, 1b) des Meßstückes (1) ein Verformungsermittler angeordnet ist.

2. Lastmeßeinrichtung nach Anspruch 1, dadurch gekennzeichnet, daß das Meßstück (1) ein ovaler Ring ist.

. . . . .

3.  Lastmeßeinrichtung nach Anspruch 2,
    dadurch gekennzeichnet,
    daß das Verhältnis der inneren Meßstückbreite zur inneren Meßstückhöhe 1:1,8 bis 1:2,5 beträgt.

4.  Lastmeßeinrichtung nach den Ansprüchen 1 oder 2,
    dadurch gekennzeichnet,
    daß der Verformungsermittler ein Schaltelement (4) ist, das an
    einer Längsseite (1a) des Meßstückes (1) befestigt ist und dessen
    Schaltstößel (5) gegen einen Vorsprung (6) der anderen Längsseite
    (1b) drückbar ist.

5.  Lastmeßeinrichtung nach einem oder mehreren der vorgenannten Ansprüche,
    dadurch gekennzeichnet,
    daß der Verformungsermittler bzw. das Schaltelement (4) mit einer
    Einstellvorrichtung versehen ist.

6.  Lastmeßeinrichtung nach Anspruch 5,
    dadurch gekennzeichnet,
    daß die Einstellvorrichtung mindestens eine Schraube (7) ist.

7.  Lastmeßeinrichtung nach Anspruch 5,
    dadurch gekennzeichnet,
    daß das Schaltelement (4) zwischen Justierschrauben (7) gehalten
    ist, für die in einem Gehäuse (13) Muttern (8) vorhanden sind.

8.  Lastmeßeinrichtung nach Anspruch 7,
    dadurch gekennzeichnet,
    daß das Gehäuse aus zwei durch eine Trenn-Dichtleiste (10) miteinander verbundenen Gehäusehälften (9, 13) gebildet ist.

. . . . .

22912 - Ko /Un.    - 3 -    0130298    30. 6. 1983

9. Lastmeßeinrichtung nach Anspruch 8,
dadurch gekennzeichnet,
daß das Gehäuse (9, 13) mittels Schrauben (10) an einer der
Längsseiten (1a) befestigt ist.

10. Lastmeßeinrichtung nach einem oder mehreren der vorgenannten Ansprüche,
dadurch gekennzeichnet,
daß mehrere Schaltelemente (4) mit unterschiedlichen Schaltpunkten vorhanden sind.

11. Lastmeßeinrichtung nach einem oder mehreren der vorgenannten Ansprüche,
dadurch gekennzeichnet,
daß das Schaltelement (4) ein Mikroschalter ist.

12. Lastmeßeinrichtung nach Anspruch 1,
dadurch gekennzeichnet,
daß die Längsseiten (1a, 1b) des Meßstückes (1) über einen Steg
miteinander verbunden sind, an dem Dehnungsmeßstreifen angeordnet
sind.

.....

1/1

Fig.1

Fig.2

Fig.3